# EUROPEAN PATENT SPECIFICATION

(11) **EP 2 031 807 B1**
(45) Date of publication and mention of the grant of the patent: **14.10.2009**
(21) Application number: 07291056.5
(22) Date of filing: 31.08.2007
(51) Int. Cl.: H04L 12/56

(54) **Method of controlling a transmission of a stream of packets**
Verfahren zur Steuerung einer Paketstromübertragung
Procédé pour le contrôle d'une transmission d'un flux de paquets

(43) Date of publication of application: 04.03.2009
(73) Proprietor: Alcatel Lucent, 75008 Paris (FR)
(72) Inventor: Hocke, Ralf, 91056 Erlangen (DE); Wenzel, Georg, 90427 Nürnberg (DE)
(74) Representative: Schmidt, Werner Karl

(56) References cited:
- EP-A- 1 345 366
- US-A1- 2005 080 918
- US-A1- 2006 176 818
- US-A1- 2007 058 548
- HEINANEN TELIA FINLAND R GUERIN UNIVERSITY OF PENNSYLVANIA J: "A Single Rate Three Color Marker; rfc2697.txt" IETF STANDARD, INTERNET ENGINEERING TASK FORCE, IETF, CH, September 1999 (1999-09), XP015008480 ISSN: 0000-0003
- MO ET AL: "A fair bandwidth distribution mechanism in a Diffserv network" COMPUTER COMMUNICATIONS, ELSEVIER SCIENCE PUBLISHERS BV, AMSTERDAM, NL, vol. 30, no. 2, 19 December 2006 (2006-12-19), pages 358-368, XP005808361 ISSN: 0140-3664

## Description

The present invention relates to a method of controlling a transmission of a stream of packets through a packet-based network, and a network unit to execute said method.

In modern packet transport systems, user traffic is measured and policed at the edge of the network. A given amount of user traffic, which fulfils the service level agreement (= SLA) is forwarded to the network and conveyed unconditionally. Traffic which is exceeding the bandwidth granted by the SLA is either forwarded to the network and conveyed conditionally, or is dropped. In order to distinguish in the network between traffic to be forwarded conditionally or unconditionally the packets are marked accordingly. Typically packets to be conveyed unconditionally are called green packets and packets conveyed conditionally are called yellow packets. Packets to be dropped are called red packets. In case of network congestion yellow packets are dropped with a higher probability compared to green packets.

The Ethernet paradigm supports only two colours for packets which are not dropped, cf. Metro Ethernet Forum (= MEF) Technical Specification MEF10 "Ethernet Services Attributes Phase 1". Nevertheless additional colours are possible, e.g., for Multi-Protocol Label Switching (= MPLS), IP (= Internet Protocol), etc. In order to avoid speaking of rainbow colours the term "drop precedence" is introduced. The higher the drop precedence the higher the probability that a packet will be dropped in the network in case of congestion.

Typical IP traffic, e.g., TCP (= Transmission Control Protocol) traffic, FTP (= File Transfer Protocol), is a stream of packets in which every packet has the same relative significance. Policing algorithms, like two rate 3 colour marker (cf. the aforementioned MEF10; IETF RFC 2698 "A Two Rate Three Color Marker") etc., measure the traffic behaviour against parameters like CIR (= committed information rate), CBS (= committed burst size), etc. If a packet violates the SLA, the colour of the packet will be changed, and the "per hop behaviour" of this packet will change accordingly. As long as all packets have the same relative significance this is a useful measure to control the traffic profile of the user traffic.

For real-time streaming traffic, especially for video traffic, this is different. A given video stream is a compound of different sub-streams. These sub-streams have a different relative significance compared to each other. Typically, the video control sub-stream has the highest significance, followed by the audio sub-streams. The "video" content (the moving pictures) of the complete stream have the lowest significance. This video content can be again subdivided into different packet classes with different significance (packets carrying complete pictures (I-Frames) have a higher significance than those carrying only difference information (P- or B-Frames), etc.). Beside the video streaming traffic, there may be other compound services with similar properties. In the following, the wording "compound service" is used as synonym for all these kinds of services.

In order to convey a compound service through a packet switched network, the different sub-streams are marked with different drop precedences to allow an easy decision in the network elements which part of the complete stream can be dropped with the least quality of experience (= QoE) degradation. This type of marking the packets of a traffic stream with different drop precedences therefore has different semantics compared to the marking by classical traffic policing algorithms.

Classical traffic policers (cf. the aforementioned MEF10; the aforementioned RFC 2698; IETF RFC 2697 "A Single Rate Three Color Marker") compare a stream of received packets with a bandwidth profile defined for that stream, as defined by a SLA. Packets which violate the SLA profile are "coloured" (i.e., marked with a drop precedence), depending on the degree of violation. Arriving packets may already carry such a marking, in which case the marking may be changed by the policer. This drop precedence semantics thus corresponds to a level of SLA compliance, but not to any kind of service specific significance level.

These policers are useful to police traffic streams in which every packet has the same relative significance. If these policers are used to police compound services like a video stream, which are composed of packets with different relative significance, packets with high significance may be degraded to lower significance and will therefore be dropped with the corresponding (higher) probability. If the information in the packets with lower significance depends on the information in the dropped packets with originally higher significance, the transmission of these packets is useless and results in wasted bandwidth. A useful traffic policer therefore has to take into account the significance of a given packet.

Therefore classical policers are not a useful measure to police compound traffic streams with different relative significance, if the significance is signalled via the drop precedence. A useful traffic policer should not change the drop precedence of a packet, but should nevertheless allow policing a given compound stream to protect all service compliant compound streams of other users/services which do not violate their service level agreement.

Today, policing algorithms are used to re-colour packets if they violate the traffic profile defined for the respective service. Re-coloured packets get a higher drop precedence level, where increasing drop precedence corresponds to decreasing degree of SLA compliance.

Also today, a bundle of compound services is forwarded in packet switched networks by assigning one queue to the complete bundle. Therefore these services compete for the given bandwidth which is assigned to the complete bundle. A differentiation between the different packets in case of insufficient total bandwidth, i.e. congestion, is done by some dropping algorithm which assigns increasing drop probability to higher drop precedence levels, irrespective of any semantic interpretation of those drop precedence levels.

In particular, preservation of packet significance information, as opposed to SLA compliance, in the network is not supported.

Re-colouring of packets of a compound service changes the signalled "significance-marking" of these packets, by overriding it with an "SLA compliance-marking". This measure leads to dropping of those packets together with non-re-coloured packets of less importance. This wastes bandwidth, because forwarding of packets which depend on the re-coloured packets (which will misleadingly be dropped due to re-colouring) only wastes bandwidth as the information of dependent packets is not useful at the receiving end without the information of the packets with higher significance.

The US Patent application US2007/0058548 describes a token bucket mechanism for packets of N different priority levels. The token bucket mechanism comprises N token buffers, the tokens of each of the N token buffers being used to process one of the N priority levels. This application also describes a borrowing principle, which is limited by a parameter Kⱼ: the purpose of Kⱼ is to protect a lower priority level j from the higher priority levels in insuring a quantity of resources (tokens) reserved exclusively for level j packets. The parameter Kⱼ guarantees a token buffer filling threshold beyond which the packets of a higher priority level can no longer help themselves. Thus, this application describes a protected/reserved quantity of tokens which may not be borrowed or stolen from a packet of higher priority.

It is the object of the present invention to provide an improved transmission control for a transmission of a stream of packets with different significance levels through a packet-based network.

The object of the present invention is achieved by a method of controlling a transmission of a stream of packets through a packet-based network, each of said packets being associated with a significance information indicating which one of N different significance levels DPᵢ is allocated to the respective packet, whereby i = 1, ..., N, with N being a positive integer, and the significance levels DPᵢ decreasing from i = 1 to i = N, wherein the method comprises the steps of providing for each of the N different significance levels DPᵢ a token bucket Bᵢ with a bucket size BSᵢ and being filled with tokens at a constant token rate IRᵢ, removing, for a transmission of a packet associated with a specific significance level DPᵢ and with a specific packet size, one token per packet size unit of the packet from the token bucket Bᵢ, additionally removing, if the number of tokens available from the token bucket Bᵢ is not sufficient for the transmission of said packet associated with the specific significance level DPᵢ and with the specific packet size, PF_{i,j} tokens per packet size unit of the packet from one or more of the token buckets Bⱼ with j = i+1, ..., N, and PF_{i,j} ≥ 1 being a penalty factor defined for j > i, and dropping said packet if the number of tokens available from said one or more token buckets Bⱼ with j > i is not sufficient for the transmission of said packet associated with the specific significance level DPᵢ and with the specific packet size. Furthermore, the object of the present invention is achieved by a network unit for controlling a transmission of a stream of packets through a packet-based network, each of said packets being associated with a significance information indicating which one of N different significance levels DPᵢ is allocated to the respective packet, whereby i = 1, ..., N, with N being a positive integer, and the significance levels DPᵢ decreasing from i = 1 to i = N, wherein the network unit comprises a control unit adapted to provide for each of the N different significance levels DPᵢ a token bucket Bᵢ with a bucket size BSᵢ and being filled with tokens at a constant token rate IRᵢ; for a transmission of a packet associated with a specific significance level DPᵢ and with a specific packet size, remove one token per packet size unit of the packet from the token bucket Bᵢ; if the number of tokens available from the token bucket Bᵢ is not sufficient for the transmission of said packet associated with the specific significance level DPᵢ and with the specific packet size, additionally remove PF_{i,j} tokens per packet size unit of the packet from one or more of the token buckets Bⱼ with j = i+1, ..., N, and PF_{i,j} ≥ 1 being a penalty factor defined for j > i; and if the number of tokens available from said one or more token buckets Bⱼ with j > i is not sufficient for the transmission of said packet associated with the specific significance level DPᵢ and with the specific packet size, drop said packet, i.e., abandon the transmission of said packet.

Generally, this invention provides a significant improvement for the control of network traffic including transport of video (IPTV / video conferences) over packet networks (IPTV = Internet Protocol Television).

The proposed invention allows significance aware policing of a packet stream without losing the significance information due to remarking. In particular, this invention allows policing of compound services without changing the significance information of the packets.

The method guarantees that packets with lowest drop precedence, i.e. the highest significance, are forwarded and the user experiences a graceful degradation of the compound service. For example, for the video service, packets carrying B-frames would be dropped first, avoiding loss of I-Frames. This will result in a jerking video sequence, as opposed to a total loss of visual information for perhaps several seconds.

Still, supervision of SLA bandwidth profiles at entry into a provider network remains possible. Such a profile would then define a guaranteed bandwidth per drop precedence level (significance class). Lower drop precedence packets are allowed to consume bandwidth shares committed for higher drop precedence packets in the bandwidth profile, but with a possible penalty factor. In this way, SLA violations with respect to the relative share per drop precedence class will lead to a lower total bandwidth (over all drop precedence levels) being admitted into the network. Other users of the network are thus protected, to some degree, against this kind of SLA violations.

From a network provider perspective, the only way to completely avoid congestion situations - and thus packet drop - in the network is expensive over-dimensioning of the network. The invention provides a means to reasonably control the traffic volume of compound services fed into the network, while still keeping information relevant for appropriate use of the accompanying significance information.

Further advantages are achieved by the embodiments of the invention indicated by the dependent claims.

According to a preferred embodiment of the invention, a coupling factor CFᵢ per bucket determines if tokens of bucket Bᵢ₋₁ will overflow to bucket Bᵢ when Bᵢ₋₁ becomes full, or not. Each token bucket Bᵢ is assigned a coupling factor CFᵢ. The coupling factor CFᵢ is a positive number, i.e., CFᵢ ≥ 0. If the token bucket Bᵢ₋₁ is full and the coupling factor CFᵢ is "activated" (CFᵢ > 0), the fraction CFᵢ * IRᵢ₋₁ tokens of the tokens which are fed at the constant token rate IRᵢ₋₁ into the full token bucket Bᵢ₋₁ are forwarded from the token bucket Bᵢ₋₁ to the token bucket Bᵢ. In other words, there is an overflow of tokens from the token bucket Bᵢ₋₁ to the token bucket Bᵢ, at the constant token rate CFᵢ *IRᵢ₋₁. On the other hand, if the token bucket Bᵢ₋₁ is full and the coupling factor CFᵢ is not "activated" (CFᵢ = 0), the tokens which are fed at the constant token rate IRᵢ₋₁ into the full token bucket Bᵢ₋₁ are simply discarded. In other words, there is no overflow of tokens from the token bucket Bᵢ₋₁ to the token bucket Bᵢ.

Further, it is possible that the coupling factor is a coupling flag which can be changed between 0 and 1.

According to another preferred embodiment of the invention, the token buckets are depleted in order of decreasing significance level, i.e., in order of increasing drop precedence level. The less important packets of a compound stream are accessed for the additionally removal of the tokens successively in an order of decreasing significance level DPⱼ.

The "video" content (the moving pictures) of a video packet stream can be subdivided into different packet classes with different significance. Packets carrying complete pictures (I-Frames) have a higher significance than those carrying only difference information (P- or B-Frames). According to another preferred embodiment of the invention, a significance level DP₁ is assigned to I-frames of a video packet stream, a significance level DP₂ is assigned to P-frames of the video packet stream, and a significance level DP₃ is assigned to B-frames of the video packet stream.

Of the bandwidth available in the packet-based network, a certain percentage is reserved or allocated to the transmission of said packet stream. Let us call this certain percentage the total bandwidth reserved for the transmission of the stream of packets through the packet-based network. For example, a share of approximately 20 percent of the total bandwidth is allocated to the I-frames of the video packet stream, a share of approximately 30 percent of the total bandwidth is allocated to the P-frames of the video packet stream, and a share of approximately 50 percent of the total bandwidth is allocated to the B-frames of the video packet stream. Approximately means in a preferred embodiment that the given values of 20, 30 and 50 may vary in a range of ± 25 percent. For example, the value of 20 may vary between 15 and 25.

In a preferred embodiment, a "stealing" of one or more tokens from one or more higher drop precedence token buckets Bⱼ for the transmission of a packet assigned a significance level DPᵢ, i.e., with i < j, is admitted with a penalty factor PF_{i,j} ≥ 1 (i < j). "Stealing" here means that a token is received from another token bucket without returning the token at a later time. As a kind of compensation, the withdrawal is obliged to the penalty factor PF_{i,j} being a positive integer greater than one, e.g., PF_{i,j} = 2 or PF_{i,j} = 4.

As aforementioned, the stream of packets is granted a certain bandwidth of the network (= total bandwidth). According to another preferred embodiment of the invention, each of the N different significance levels DPᵢ is allocated a share of the granted bandwidth. The token rates IRᵢ of the tokens fed into the N token buckets Bᵢ are adjusted according to the respective allocated bandwidth shares.

Preferably, the network unit is represented by a traffic policer located at the edge of the packet-based network. Furthermore, the invention introduces a significance-aware multi-rate multi-colour network unit (= policer) without remarking for use with significance differentiated services in a network. The specified new policer is colour (or drop precedence) aware but does not change the drop precedence of any forwarded packet. The policer reduces the overall bandwidth assigned to the compound stream. The presented algorithm guarantees that always the less important packets of a compound stream are dropped first, and that the significance information of a given packet is preserved.

The invention combines two aspects: i) The policer is used for compound services with different sub-streams of different significance, which is significance aware. Significance is indicated by a drop precedence marking of the service packets. ii) This policer does not change the drop precedence of a given packet. Instead it reduces the available bandwidth for packets with lower significance (higher drop precedence).

As the drop precedence marking of packets which are allowed to pass the network unit (= policer) at the edge of the network is not changed, preferential treatment (compared to higher drop precedence packets) at congestion points in the network is still possible. This helps to avoid useless forwarding of packets with lower significance, whose contents depend on higher significance packets, in situations where higher significance packets are dropped.

In another preferred embodiment of the invention, the network unit is represented by a gateway node, a session border controller (= SBC) or an intercarrier gateway, i.e. a network node enforcing SLA requirements between sub-networks of the packet-based network. The sub-networks may be, e.g., networks operated by different network providers.

These as well as further features and advantages of the invention will be better appreciated by reading the following detailed description of presently preferred exemplary embodiments taken in conjunction with the accompanying figures.
Fig. 1 shows a block diagram of a token bucket system according to a first embodiment of the invention.
Fig. 2 shows a first diagram for illustrating a method according to the first embodiment of the invention.
Fig. 3 shows a second diagram for illustrating the method according to the first embodiment of the invention.

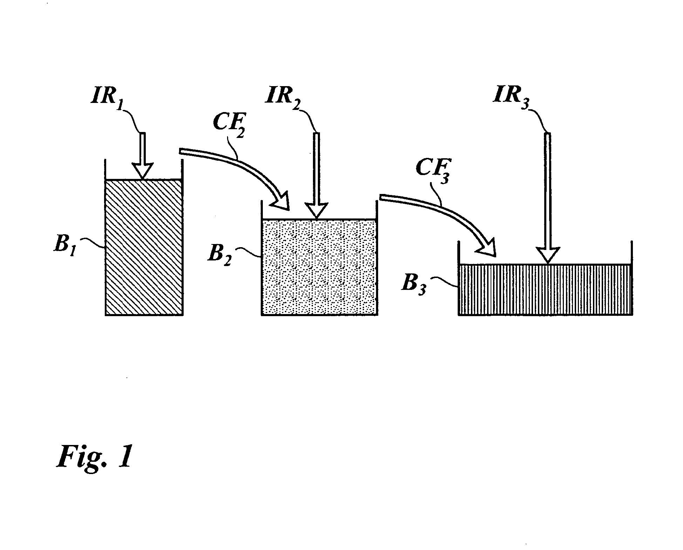

Figures 1 to 3 give an embodiment of the invention where N = 3.

Fig. 1 shows three token buckets B₁, B₂, B₃. which may be provided at a policer, which is part of a network unit controlling the transmission of packets through a network. The network may be a transport or a data network, e.g., a proprietary IPTV network or a public packet-based network such as the Internet.

Typically, the network unit comprises a plurality of policers. Each policer is associated with a dedicated stream of packets, e.g. a dedicated IP based audio/video connection. Each policer controls the compliance of the associated packet stream with the SLA-requirements assigned to said stream of packets. Thereby, it controls the transmission of the packets of the associated packet stream through the network.

The token buckets B₁, B₂ and B₃ are provided by one of the policers and used by this policer to control the transmission of the packets of the associated stream of packets through the network.

A certain share of the bandwidth available in the network has been reserved for the transmission of the stream of packets. This is the maximum available bandwidth for the transmission of the stream of packets. Bandwidth which is not used for the transmission of this stream of packets is used for other services, e.g., for the transmission of other streams.

The network unit is composed of one or several interlinked computers, i.e., a hardware platform, a software platform based on the hardware platform and several application programs executed by the system platform formed by the software and hardware platform. The functionalities of the policer are provided by the execution of these application programs. The application programs or a selected part of these application programs constitute a computer software product providing a packet control service as described in the following, when executed on the system platform. Further, such computer software product is constituted by a storage medium storing these application programs or said selected part of application programs. The implementation of the token buckets may be represented by a corresponding command of a computer program running on a processor of the policer.

Further, it is possible that the policer is at least partly implemented by pure hardware and the token buckets are represented by hardware counters.

The token bucket B₁ at the left of the diagram in Fig.1 has a bucket size which is given by a token bucket size parameter BS₁. The token bucket B₁ is filled at a constant token rate IR₁. The token bucket B₂ in the middle of the diagram has a bucket size which is given by a token bucket size parameter BS₂. The token bucket B₂ is filled at a constant token rate IR₂. The token bucket B₃ at the right of the diagram has a bucket size which is given by a token bucket size parameter BS₃. The token bucket B₃ is filled at a constant token rate IR₃.

A coupling factor CF₂ associated with the token bucket B₂ in the middle indicates if tokens of bucket B₁ will overflow to bucket B₂ when B₁ becomes full (CF₂ > 0), or not (CF₂ = 0). A coupling factor CF₃ associated with the token bucket B₃ on the right indicates if tokens of bucket B₂ will overflow to bucket B₃ when B₂ becomes full (CF₃ > 0), or not (CF₃ = 0). In the described embodiment, both the coupling factor CF₂ and the coupling factor CF₃ have the value "1", i.e., the overflow option is "activated".

The number of token buckets used, in this embodiment three token buckets, is equal to the number of significance levels to be distinguished. In parallel to the term "significance level", the term "drop precedence" is used. The term "drop precedence" derives from the fact that a packet with a low significance level has a high drop precedence, i.e., is first to be dropped (deleted) from a queue of packets waiting for transmission through the network. Thus, these terms denote inverse relations. The higher the significance level of a packet, the lower its drop precedence, and vice versa.

The sum of the token rates is equal to the total maximum bandwidth (= Total Maximum BW) allocated to the stream of packets: IR₁ + IR₂ + IR₃ = Total Maximum BW.

Packets with the highest significance level DP1 have the lowest drop precedence level. Packets with the medium significance level DP2 have a medium drop precedence level 2. Packets with the lowest significance level DP3 have the highest drop precedence level.

Packets arriving marked with the significance level DPᵢ (i = 1, 2, 3) will be forwarded if bucket Bᵢ or any lower significance level bucket Bⱼ (j = i+1, ..., 3), contains enough tokens. "Stealing" from lower significance level token buckets is admitted with a penalty factor PF_{i,j} ≥ 1 (j > i). If not enough tokens are available to allow forwarding of the packet, the packet is dropped.

For each packet P arriving at the policer, carrying a significance information indicating a significance level DPᵢ, the policer's decision to forward or drop the packet is based on the number of tokens currently available in the corresponding token buckets Bₖ with k ≥ i, k = 1, ..., N (i.e., all token buckets corresponding to significance levels with equal or less significance than the significance level DPᵢ). The required number of tokens per size unit of the packet is one token, if the token is taken from a token bucket Bₖ with k = i, and it is PF_{i,k} tokens per size unit of the packet, if the tokens are taken from a token bucket Bₖ with k > i.

Preferably, the size unit of the packets is a Byte. Thus, the required number of tokens per Byte of the packet is one token, if the token is taken from a token bucket Bₖ with k = i, and it is PF_{i,k} tokens per Byte, if the tokens are taken from a token bucket Bₖ with k > i.

For the token bucket "refill" procedure (with rate IRᵢ, limit BSᵢ, and overflow control CFᵢ), the proposed invention does not specify or restrict any details. A possible implementation can be as defined in the aforementioned MEF10 for the case N = 2.

If enough tokens are available to account for all the Bytes of the packet, then the packet shall be forwarded. The significance level marking of the packet shall not be changed.

The appropriate number of tokens shall be removed from buckets Bₖ (with k = i, ..., N) according to the 'tokens per Byte' rule above. Buckets shall be depleted in order of increasing drop precedence level. The handling of 'fractional Bytes' - if a bucket does not contain an integral multiple of the tokens per Byte required - may vary for different embodiments of the algorithm.

If not enough tokens are available to account for all the Bytes of the packet, then the packet shall be dropped.

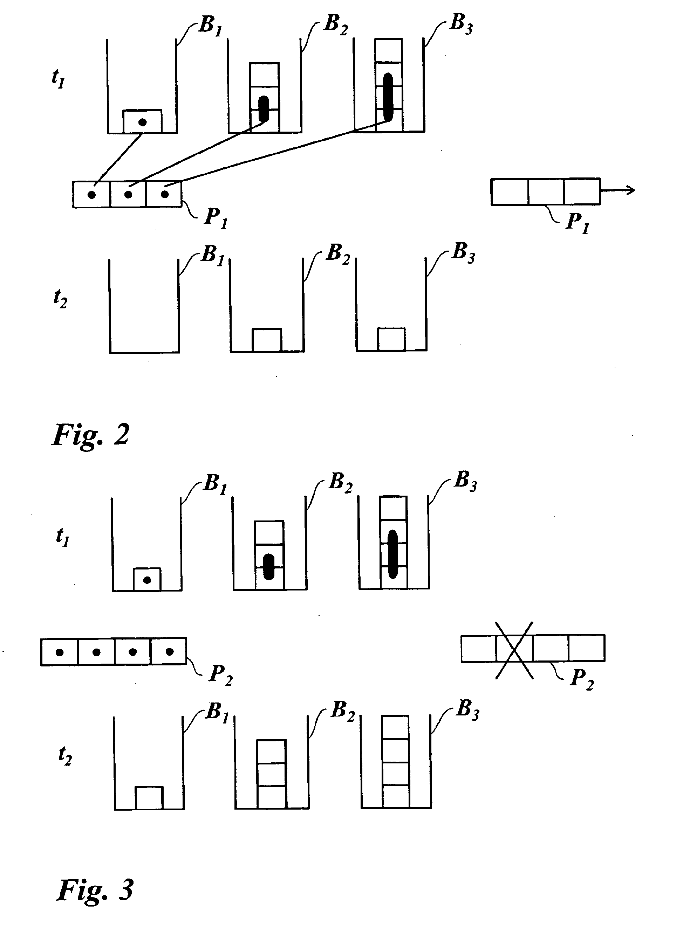

For example, in the case N = 3, a packet arriving marked with the significance level DP₁ will be forwarded if the token bucket B₁ and the token buckets B₂ and B₃ contain enough tokens. The required number of tokens per Byte of the packet is one token if the tokens are taken from the token bucket B₁. "Stealing" from the token bucket B₂ is charged with a penalty factor PF_{1,2} ≥ 1. "Stealing" from the token bucket B₃ is charged with a penalty factor PF_{1,3} ≥ 1. If not enough tokens are available from the buckets B₁, B₂, and B₃ to allow forwarding of the packet, the packet is dropped. This is in the following illustrated by means of Fig. 2 and Fig. 3.

Fig. 2 shows the token buckets B₁, B₂ and B₃ at a time t₁ and a time t₂ as well as data packet P₁.

At the time t₁, the token bucket B₁ contains one token, the token bucket B₂ contains three tokens and the token bucket B₃ contains four tokens. "Stealing" from the token bucket B₂ is charged with a penalty factor PF_{1,2} = 2 and "stealing" from the token bucket B₃ is charged with a penalty factor PF_{1,3} = 3.

The policer detects at the time t₁ the arrival of the data packet P₁ which is marked with a significance level DP₁. The policer determines the significance level of the arrived packet and the number of tokens necessary to transmit the packets according to the "tokens per Byte" rule. The policer finds that the transmission of the data packet P₁ requires three tokens. The policer takes one token from the token bucket B₁, two tokens from the token bucket B₂ and three tokens from the token bucket B₃. Since the required number of tokens are not available in the token bucket B₁, the policer has to steal tokens from the token buckets B₂ and B₃ and has therefore taken for one token two tokens from the token bucket B₂ and for one token three tokens from the token bucket B₃.

Since there are enough tokens available from the token buckets B₁, B₂ and B₃ to allow the forwarding of the data packet P₁, the policer allows the transmission of the data packet P₁ through the network. After transmission of the data packet P₁, i.e. at the time t₂, the number of tokens remaining in the token buckets B₁, B₂ and B₃ is 0,1 and 1, respectively.

Fig. 3 shows the token buckets B₁, B₂ and B₃ at the time t₁ and t₂ as well as a data packet P₂.

The data packet P₂ is still marked with the significance level DP₁ but the length of the data packet P₂ is greater than the length of the data packet P₁ and it needs four tokens to allow the transmission of the data packet P₂. The policer tries to take the corresponding number of tokens from the token bucket, B₁, B₂ and B₃. It can take one token from the token bucket B₁, can steal two tokens for one token from the token bucket B₂ and can steal three tokens for one token from the token bucket B₃. There are not enough tokens available from the token buckets B₁, B₂ and B₃ to allow the forwarding of the data packet P₂ and the policer drops the data packet P₂. After the drop of the data packet P₂, the token buckets B₁, B₂ and B₃ still contain 1, 3 and 4 tokens, respectively.

To further illustrate the method, another example: For example, a packet arriving marked with the significance level DP₂ will be forwarded if the token bucket B₂ and the token bucket B₃ contain enough tokens. The required number of tokens per Byte of the packet is one token if the tokens are taken from the token bucket B₂. "Stealing" from the token bucket B₃ is charged with a penalty factor PF_{2,3} ≥ 1. If not enough tokens are available from the buckets B₂, and B₃ to allow forwarding of the packet, the packet is dropped.

Another embodiment of the invention illustrates the effects of the algorithm. A typical video stream may consist of approx. 20 % I-Frames, 30 % P-Frames and 50 % B-Frames; this relation is used as a bandwidth profile for policing the total video bandwidth (= VBW). In the example, three different drop precedence levels are assumed. Again, reference is made to the accompanying drawing shown in the figures.

The lowest drop precedence level (= highest significance level) is assigned to the I-Frames, and for simplicity of reading this drop precedence is represented by the colour green (indicated in Fig.1 by a left-sloped hatching). The medium drop precedence level (= medium significance level) is assigned to the P-Frames and is represented by yellow (indicated in Fig.1 by dots). The highest drop precedence (= lowest significance level) is assigned to the B-Frames and is represented by orange (indicated in Fig.1 by a vertical hatching). The penalty factor for green frames to use yellow tokens PF_{green,yellow} = PF_{1,2} may be 2, and PF_{green,orange} = PF_{1,3} = 4.

If one I-Frame is lost, all subsequent P- and B-Frames are useless. A user therefore might decide to encode the complete video into I-Frames and not to use P- and B-Frames (or just to considerably increase the amount of I-Frames compared to the P-/B-Frames).

The input is 100% VBW (total video bandwidth). For the first 20% of this video stream the policer has enough tokens. That means that 20% VBW worth of tokens is taken from the "green" token bucket B₁. After these tokens are used, 100% - 20% = 80% VBW remains. Thus, the algorithm will start to use yellow tokens. Due to the algorithm, only half (from PF_{green,yellow} = 2 follows a factor = 1/2, since for each byte two yellow tokens must be consumed) of the yellow bandwidth is available for green packets. That means that 1/2 * 30% = 15% VBW worth of tokens is taken from the "yellow" token bucket B₂. After these tokens are consumed, 100% - 20% - 15% = 65% VBW remains. The algorithm starts using orange tokens. Due to PF_{green,orange} =4 only a fourth of the assigned orange bandwidth is available to green packets (from PF_{green,orange} =4 follows a factor = 1/4, since for each byte four orange tokens must be consumed). That means that 1/4 * 50% = 12.5% VBW worth of tokens is taken from the "orange" token bucket B₃. After these tokens are consumed, 100% - 20% - 15% - 12.5% = 52.5% VBW remains.

Overall only 100% - 52.5% = 47.5 % of the overall assigned bandwidth is available for the green part of the compound stream. This clearly shows that consuming too much high significance bandwidth first influences lower significance parts of the compound stream without influencing the more significant part of the service. The compound service thus can transmit more low drop precedence traffic than committed by the profile, but at the cost of less overall bandwidth. SLA non-compliant higher significance traffic is therefore forwarded on the cost of lower overall video bandwidth for this service. This measure therefore guarantees a kind of fairness to other services.

If on the other side a higher significance class does not consume its assigned bandwidth this bandwidth is granted to a lower significance class by the use of the coupling factor CF.

## Claims

1. A method of controlling a transmission of a stream of packets through a packet-based network, each of said packets being associated with a significance information indicating which one of N different significance levels DPᵢ is allocated to the respective packet, whereby i = 1, ..., N, with N being a positive integer, and the significance levels DPᵢ decreasing from i = 1 to i = N,
the method comprising the steps of:
providing for each of the N different significance levels DPᵢ a token bucket Bᵢ with a bucket size BSᵢ and being filled with tokens at a constant token rate IRᵢ;
for a transmission of a packet associated with a specific significance level DPᵢ and with a specific packet size, removing one token per packet size unit of the packet from the token bucket Bᵢ;
if the number of tokens available from the token bucket Bᵢ is not sufficient for the transmission of said packet associated with the specific significance level DPᵢ and with the specific packet size, additionally removing PFᵢ,ⱼ tokens per packet size unit of the packet from one or more of the token buckets Bᵢ with j = i+1, ..., N, and PFᵢ,ⱼ > 1 being a penalty factor defined for j > i whereby the penalty factor PF_{i,j} is a positive integer greater than one; and
if the number of tokens available from said one or more token buckets Bⱼ with j > i is not sufficient for the transmission of said packet associated with the specific significance level DPᵢ and with the specific packet size, dropping said packet.

2. The method of claim 1,
**characterised in**
**that** the method further comprises the step of:
assigning to I-frames of a video packet stream a significance level DP₁, to P-frames of the video packet stream a significance level DP₂, and to B-frames of the video packet stream a significance level DP₃.

3. The method of claim 1,
**characterised in**
**that** the method further comprises the steps of:
allocating to each of the N different significance levels DPᵢ a share of a total bandwidth reserved for the transmission of the stream of packets through the packet-based network; and
adjusting the token rates IRᵢ of the N token buckets Bᵢ according to the allocated bandwidth shares.

4. The method of claims 2 and 3,
**characterised in**
**that** the method further comprises the step of:
allocating to the I-frames to the P-frames and to the B-frames of the video packet stream a predetermined share of the total bandwidth.

5. The method of claim 1,
**characterised in**
**that** the method comprises the steps of:
assigning to each token bucket Bᵢ a coupling factor CFᵢ, the coupling factor CFᵢ defined to have either a value of 0 or any positive value;
if the coupling factor CFᵢ is greater than 0, forwarding the fraction of CFᵢ * IRᵢ₋₁ tokens which arrive at the constant token rate IRᵢ₋₁ at the token bucket Bᵢ₋₁ from the token bucket Bᵢ₋₁ to the token bucket Bᵢ when Bᵢ₋₁ is filled; and
if the coupling factor CFᵢ equals 0, dropping the tokens which arrive at the constant token rate IRᵢ₋₁ at the token bucket Bᵢ₋₁ from the token bucket Bᵢ₋₁ when Bᵢ₋₁ is filled.

6. The method of claim 1,
**characterised in**
**that** the method further comprises the steps of:
if the number of tokens available from said token bucket Bᵢ is not sufficient for the transmission of said packet, accessing the token buckets Bⱼ for the additional removal of the tokens successively in an order of decreasing significance level DPⱼ.

7. A network unit for controlling a transmission of a stream of packets through a packet-based network, each of said packets being associated with a significance information indicating which one of N different significance levels DPᵢ is allocated to the respective packet, whereby i = 1, ..., N, with N being a positive integer, and the significance levels DPᵢ decreasing from i = 1 to i = N,
whereby the network unit comprises a control unit adapted to provide for each of the N different significance levels DPᵢ a token bucket Bᵢ with a bucket size BSᵢ and being filled with tokens at a constant token rate IRᵢ; for a transmission of a packet associated with a specific significance level DPᵢ and with a specific packet size, remove one token per packet size unit of the packet from the token bucket Bᵢ;
if the number of tokens available from the token bucket Bᵢ is not sufficient for the transmission of said packet associated with the specific significance level DPᵢ and with the specific packet size, additionally remove PF_{i,j} tokens per packet size unit of the packet from one or more of the token buckets Bⱼ with j = i+1, ..., N, and PF_{i,j} > 1 being a penalty factor defined for j > i whereby the penalty factor PF_{i,j} is a positive integer greater than one; and if the number of tokens available from said one or more token buckets Bⱼ with j > i is not sufficient for the transmission of said packet associated with the specific significance level DPᵢ and with the specific packet size, drop said packet.

8. The network unit of claim 7,
**characterised in**
**that** the network unit is a traffic policer located at the edge of the packet-based network.

9. The network unit of claim 7,
**characterised in**
**that** the network unit is a gateway node located at a point of demarcation between different parts of the packet-based network.

## Patentansprüche

1. Ein Verfahren zur Steuerung einer Übertragung eines Paketstroms über ein paketbasiertes Netzwerk, wobei einem jeden der besagten Pakete eine Signifikanz-Information zugeordnet ist, welche anzeigt, welcher der N verschiedenen Signifikanzpegel DPᵢ dem entsprechenden Paket zugeordnet ist, wobei i = 1, ..., N, wobei N eine positive ganze Zahl ist, und wobei die Signifikanzpegel DPᵢ von i = 1 bis i = N sinken,
wobei das Verfahren die folgenden Schritte umfasst:
Bereitstellen, für einen jeden der N verschiedenen Signifikanzpegel DPᵢ, eines Token-Buckets Bᵢ mit einer Bucket-Größe BSᵢ, welcher bei einer konstanten Token-Rate IRᵢ mit Tokens gefüllt wird;
für eine Übertragung eines Pakets mit einem spezifischen Signifikanzpegel DPᵢ und einer spezifischen Paketgröße, Entfernen eines Tokens pro Paketgrößeneinheit des Pakets aus dem Token-Bucket Bᵢ:
wenn die Anzahl der aus dem Token-Bucket Bᵢ verfügbaren Tokens für die Übertragung des besagten Pakets mit dem spezifischen Signifikanzpegel DPᵢ und einer spezifischen Paketgröße nicht ausreicht, zusätzliches Entfernen von PF_{i,j} Tokens pro Paketgrößeneinheit des Pakets aus einem oder mehreren der Token-Buckets Bᵢ, wobei j = i+1, ... , N, und PF_{i,j} > 1 ein für j > i definierter Straffaktor ist, wobei der Straffaktor PF_{i,j} eine positive ganze Zahl größer als Eins ist; und
wenn die Anzahl der aus dem besagten einen oder mehreren Token-Buckets Bⱼ mit j > i verfügbaren Tokens für die Übertragung des besagten Pakets mit dem spezifischen Signifikanzpegel DPᵢ und einer spezifischen Paketgröße nicht ausreicht, Verwerfen des besagten Pakets.

2. Das Verfahren nach Anspruch 1,
**dadurch gekennzeichnet, dass**
das Verfahren weiterhin den folgenden Schritt umfasst:
Zuteilen eines Signifikanzpegels DP₁ an I-Rahmen eines Video-Paketstroms, eines Signifikanzpegels DP₂ an P-Rahmen des Video-Paketstroms, und eines Signifikanzpegels DP₃ an B-Rahmen des Video-Paketstroms.

3. Das Verfahren nach Anspruch 1,
**dadurch gekennzeichnet, dass**
das Verfahren weiterhin die folgenden Schritte umfasst:
Zuordnen eines Anteils einer für die Übertragung des Paketstroms über das paketbasierte Netzwerk reservierten Gesamtbandbreite zu einem jeden der N verschiedenen Signifikanzpegel DPᵢ; und
Anpassen der Token-Raten IRᵢ der N Token-Buckets Bᵢ gemäß den zugeordneten Bandbreitenanteilen.

4. Das Verfahren nach den Ansprüche 2 und 3,
**dadurch gekennzeichnet, dass**
das Verfahren weiterhin den folgenden Schritt umfasst:
Zuordnen eines vorbestimmten Anteils der Gesamtbandbreite zu den I-Rahmen, den P-Rahmen und den B-Rahmen des Video-Paketstroms.

5. Das Verfahren nach Anspruch 1,
**dadurch gekennzeichnet, dass**
das Verfahren weiterhin die folgenden Schritte umfasst:
Zuteilen eines Kopplungsfaktors CFᵢ an jedes Token-Bucket Bᵢ, wobei der Kopplungsfaktors CFᵢ so definiert ist, dass er entweder einen Wert von 0 oder einen beliebigen positiven Wert aufweist;
wenn der Kopplungsfaktors CFᵢ größer als 0 ist, Weiterleiten des Anteils der CFᵢ * IRᵢ₋₁-Tokens, welche bei einer konstanten Token-Rate IRᵢ₋₁ am Token-Bucket Bᵢ₋₁ ankommen, vom Token-Bucket Bᵢ₋₁ an das Token-Bucket Bᵢ, wenn Bᵢ₋₁ voll ist; und
wenn der Kopplungsfaktors CFᵢ gleich 0 ist, Verwerfen der Tokens, welche bei einer konstanten Token-Rate von IRᵢ₋₁ am Token-Bucket Bᵢ₋₁ ankommen, aus dem Token-Bucket Bᵢ₋₁, wenn Bᵢ₋₁ voll ist.

6. Das Verfahren nach Anspruch 1,
**dadurch gekennzeichnet, dass**
das Verfahren weiterhin die folgenden Schritte umfasst:
Wenn die Anzahl der aus dem besagten Token-Bucket Bᵢ verfügbaren Tokens für die Übertragung des besagten Pakets nicht ausreicht, Zugreifen auf die Token-Buckets Bⱼ, um zusätzlich Tokens sukzessiv in absteigender Reihenfolge des Signifikanzpegels DPⱼ zu entfernen.

7. Eine Netzwerkeinheit zur Steuerung einer Übertragung eines Paketstroms über ein paketbasierten Netzwerk, wobei einem jeden der besagten Pakete eine Signifikanz-Information zugeordnet ist, welche anzeigt, weicher der N verschiedenen Signifikanzpegel DPᵢ dem entsprechenden Paket zugeordnet ist, wobeii = 1, .. , N, wobei N eine positive ganze Zahl ist, und wobei die Signifikanzpegel DPᵢ von i = 1 bis i = N sinken,
wobei die Netzwerkeinheit eine Steuereinheit umfasst, welche fähig ist, für einen jeden der N verschiedenen Signifikanzpegel DPᵢ ein Token-Bucket Bᵢ mit einer Bucket-Größe BSᵢ, welches bei einer konstanten Token-Rate JRᵢ mit Tokens gefüllt wird, für eine Übertragung eines Pakets mit einem spezifischen Signifikanzpegel DPᵢ und mit einer spezifischen Paketgröße bereitzustellen und einen Token pro Paketgrößeneinheit des Pakets aus dem Token-Bucket Bᵢ zu entfernen;
wenn die Anzahl der aus dem Token-Bucket Bᵢ verfügbaren Tokens für die Übertragung des besagten Pakets mit dem spezifischen Signifikanzpegel DPᵢ und mit einer spezifischen Paketgröße nicht ausreicht, zusätzlich PF_{i,j} Tokens pro Paketgrößeneinheit des Pakets aus einem oder mehreren der Token-Buckets Bⱼ zu entfernen, wobei j = i+1, ..., N, und PF_{i,J} > 1 ein für j > i definierter Straffaktor ist, wobei der Straffaktor Pf_{i,j} eine positive ganze Zahl größer als Eins ist; und wenn die Anzahl der aus dem besagten einen oder mehreren Token-Buckets Bⱼ mit j > i verfügbaren Tokens für die Übertragung des besagten Pakets mit dem spezifischen Signifikanzpegel DPᵢ und mit einer spezifischen Paketgröße nicht ausreicht, das besagte Paket zu verwerfen.

8. Die Netzwerkeinheit nach Anspruch 7,
**dadurch gekennzeichnet, dass**
die Netzwerkeinheit ein an der Kante des paketbasierten Netzwerks angeordneter Verkehrsüberwacher ist.

9. Die Netzwerkeinheit nach Anspruch 7,
**dadurch gekennzeichnet, dass**
die Netzwerkeinheit ein an einem Grenzpunkt zwischen verschiedenen Abschnitten des paketbasierten Netzwerks angeordneter Gateway-Knoten ist.

## Revendications

1. Procédé de commande d'une transmission d'un flux de paquets à travers un réseau à paquets, chacun desdits paquets étant associé à une information d'importance indiquant lequel des N niveaux d'importance différents DPi est affecté au paquet correspondant, avec i = 1, ..., N, N étant un nombre entier positif, et les niveaux d'importance DPᵢ
décroissant de i = 1 à i = N,
le procédé comprenant les étapes suivantes :
fourniture, pour chacun des N niveaux d'importance différents DPi, d'un seau de jetons Bi ayant une taille de seau BSᵢ et qui est rempli de jetons à un débit de jetons constant IRj ;
pour la transmission d'un paquet associé à un niveau d'importance DPi spécifique et à une taille de paquet spécifique, enlèvement d'un jeton par unité de taille de paquet du paquet dans le seau de jetons Bi ;
si le nombre de jetons disponibles dans le seau de jetons Bi est insuffisant pour la transmission dudit paquet associé au niveau d'importance DPi spécifique et à la taille de paquet spécifique, suppression supplémentaire de PFi,j jetons par unité de taille de paquet du paquet dans un ou plusieurs des seaux de jetons Bⱼ, avec j =i+1, ..., N, et PFi,j > 1 étant un facteur de pénalité défini pour j > i, le facteur de pénalité PFi,j étant un nombre entier positif supérieur à 1 ; et
si le nombre de jetons disponibles dans ledit un ou plusieurs seaux de jetons Bⱼ avec j > i est insuffisant pour la transmission dudit paquet associé au niveau d'importance DPi spécifique et à la taille de paquet spécifique, éjection dudit paquet.

2. Procédé selon la revendication 1,
**caractérisé en ce**
**que** le procédé comprend en outre les étapes suivantes :
affectation d'un niveau d'importance DP₁ aux trames I d'un flux de paquets vidéo, d'un niveau d'importance DP₂ aux trames P du flux de paquets vidéo et d'un niveau d'importance DP₃ aux trames B du flux de paquets vidéo.

3. Procédé selon la revendication 1,
**caractérisé en ce**
**que** le procédé comprend en outre les étapes suivantes :
affectation à chacun des N niveaux d'importance DPi différents d'une part d'une largeur de bande totale réservée à la transmission du flux de paquets à travers le réseau à paquets ; et
réglage des débits de jetons IR₁ des N seaux de jetons Bᵢ en fonction des parts de largeur de bande affectées.

4. Procédé selon les revendications 2 et 3,
**caractérisé en ce**
**que** le procédé comprend en outre les étapes suivantes :
affectation d'une part prédéterminée de la largeur de bande totale aux trames I, aux trames P et aux trames B du flux de paquets vidéo.

5. Procédé selon la revendication 1,
**caractérisé en ce**
**que** le procédé comprend les étapes suivantes :
affectation à chaque seau de jetons Bi d'un facteur de couplage CFi, le facteur de couplage CFi étant défini pour posséder soit une valeur égale à 0, soit toute valeur positive ; si le facteur de couplage CFi est supérieur à 0, transfert de la fraction de CFi * IRi-1 jetons, qui arrive au niveau du seau de jetons Bi-1 avec le débit de jetons constant IRi-1, du seau de jetons Bᵢ₋₁ au seau de jetons Bi lorsque Bᵢ₋₁ est rempli ; et
si le facteur de couplage CFi est égal à 0, éjection des jetons qui arrivent au niveau du seau de jetons Bᵢ₋₁ avec le débit de jetons constant IRi-1 du seau de jetons Bᵢ₋₁ lorsque Bᵢ₋₁ est rempli.

6. Procédé selon la revendication 1,
**caractérisé en ce**
**que** le procédé comprend en outre les étapes suivantes :
si le nombre de jetons disponibles auprès dudit seau de jetons Bi est insuffisant pour la transmission dudit paquet, accès aux seaux de jetons Bj pour la suppression supplémentaire successive des jetons dans un ordre décroissant du niveau d'importance DPj.

7. Unité de réseau pour commander une transmission d'un flux de paquets à travers un réseau à paquets, chacun desdits paquets étant associé à une information d'importance indiquant lequel des N niveaux d'importance différents DPi est affecté au paquet correspondant, avec i = 1, ..., N, N étant un nombre entier positif, et les niveaux d'importance DPi décroissant de i = 1 à i = N,
l'unité de réseau comprenant une unité de commande adaptée pour fournir pour chacun des N niveaux d'importance DPi différents un seau de jetons Bᵢ ayant une taille de seau BSi et étant rempli de jetons à un débit de jetons constant IRⱼ ; pour la transmission d'un paquet associé à un niveau d'importance DPᵢ spécifique et à une taille de paquet spécifique, enlèvement d'un jeton par unité de taille de paquet du paquet dans le seau de jetons Bi ;
si le nombre de jetons disponibles auprès du seau à jetons Bᵢ est insuffisant pour la transmission dudit paquet associé au niveau d'importance DPi spécifique et à la taille de paquet spécifique, enlèvement supplémentaire de PFi,j jetons par unité de taille de paquet du paquet dans un ou plusieurs des seaux de jetons Bⱼ, avec j = i+1, ..., N, et PFi,j > 1 étant un facteur de pénalité défini pour j > i, le facteur de pénalité PFi,J étant un nombre entier positif supérieur à 1 ; et si le nombre de jetons disponibles dans ledit un ou plusieurs seaux de jetons Bⱼ avec j > est insuffisant pour la transmission dudit paquet associé au niveau d'importance DPi spécifique et à la taille de paquet spécifique, éjection dudit paquet.

8. Unité de réseau selon la revendication 7,
**caractérisée en ce**
**que** l'unité de réseau est un régulateur de trafic qui se trouve sur la limite du réseau à paquets.

9. Unité de réseau selon la revendication 7,
**caractérisée en ce**
**que** l'unité de réseau est un noeud de passerelle qui se trouve sur un point de démarcation entre différentes parties du réseau à paquets.
